(19) Europäisches Patentamt
European Patent Office
Office européen des brevets

(11) Publication number: **0 301 716 A2**

(12) **EUROPEAN PATENT APPLICATION**

(21) Application number: 88306161.6

(51) Int. Cl.4: C08G 69/40 , C08G 69/34

(22) Date of filing: 06.07.88

(30) Priority: 27.07.87 US 78308

(43) Date of publication of application: 01.02.89 Bulletin 89/05

(84) Designated Contracting States: DE FR GB NL SE

(71) Applicant: TEXACO DEVELOPMENT CORPORATION
2000 Westchester Avenue
White Plains New York 10650(US)

(72) Inventor: Lin, Jaing-Jen
2617 Oak Meadow Drive
Round Rock, TX 78664(US)
Inventor: Speranza, George Phillip
2800 Silverleaf
Austin Texas 78757(US)

(74) Representative: Harrison, Michael Robert et al
Urquhart-Dykes & Lord 91 Wimpole Street
London W1M 8AH(GB)

(54) **Polyamidopolyamines.**

(57) A polyamidodi- or tri-primary amine prepared by:

a. reacting a polyamine having the formula:

$R(NH_2)_x$

with at least a bimolar excess, based on the primary amine groups of said polyamine, of a dicarboxylic acid having the formula:

$$HO-\underset{\underset{O}{\|}}{C}-R'-\underset{\underset{O}{\|}}{C}-OH \qquad (X)$$

to thereby prepare an intermediate reaction product having the formula:

$$R(\overset{H}{N}-\underset{\underset{O}{\|}}{C}-R'-\underset{\underset{O}{\|}}{C}-OH)_x \qquad (VIII)$$

b. reacting said intermediate reaction product with a di-primary amine having the formula:

(IX) $H_2NR''RNH_2$

to thereby provide, as the principal product of the reaction, a polyamidodi- or tri-primary amine having the formula:

EP 0 301 716 A2

Xerox Copy Centre

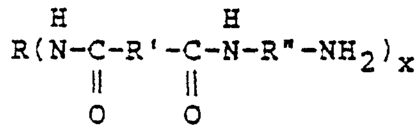

(I)

# POLYAMIDOPOLYAMINES

## BACKGROUND OF THE INVENTION

### Technical Field of the Invention

This invention relates to polyamidopolyamines. More particularly, this invention relates to polyamidopolyamines prepared by reacting an aliphatic or an aromatic di-primary amine with the carboxy terminated reaction product of a poly(oxyethylene/oxypropylene) diamine or triamine with at least a bimolecular molar excess of an aromatic or aliphatic dicarboxylic acid, ester or anhydride thereof. Still more particularly, this invention relates to novel polyamidopolyamines prepared by reacting at least two mole equivalents of a polyoxypropylene, a polyoxyethylene or a poly(oxypropylene/oxyethylene) diamine or triamine with an aromatic or aliphatic dicarboxylic acid to form a carboxy terminated intermediate product which is then reacted with an equimolar amount of an aliphatic or aromatic di-primary amine to thereby provide a polyamidopolyamine characterized by the presence of terminal primary amine groups and internal amido and carboxyl groups.. The reactions are preferably conducted at autogenous pressure at temperatures within the range of about 150° to 250° C.

The polyamidopolyamines of the present invention are liquids or amorphous solids, depending upon the starting materials, and can be used as raw materials for a wide variety of purposes such as, for example, as chain extenders for epoxy resins, curing agents for epoxy resins, as raw materials for the manufacture of polyureas, thickening agents, etc. The products may also be used as raw materials for the preparation of fuel and lubricant additives, for textile and fiber treating agents, for the preparation of adhesives, for use in the manufacture of polyureas, for use in encapsulation and molding applications, etc.

### Prior Art

It is known, as exemplified by Yeakey U. S. Patent No. 3,654,370 to prepare polyoxyalkylene polyamines by the reductive amination of a polyoxyalkylene polyol. The reductive amination is conducted catalytically in the presence of hydrogen and ammonia and an appropriate reductive amination catalyst, such as a nickel, copper and chromia catalyst. The polyoxyalkylene polyamines that are prepared in this fashion are stable articles of commerce having a wide variety of uses such as those mentioned above. In particular, they have found utility as curing agents for epoxy resins, as plasticizers, as cross linking agents and binders for textiles, and as intermediates in the preparation of polyureas. In general, polyoxyalkylene polyamines having molecular weights ranging from about 200 to about 5,000 can be prepared by the Yeakey process.

Kwang U. S. Patent No. 3,257,342 is directed to epoxy resins that are cured with a polyamidodiamine prepared by reacting about two molar equivalents of a polyoxyalkylenediamine with an aliphatic dicarboxylic acid.

Klein U. S. Patent No. 4,133,803 is directed to the preparation of novel thermoplastic adhesive compositions having melting points between 20° and 180° C prepared by reacting a polyoxypropylene diamine or triamine with an aliphatic or aromatic dicarboxylic acid, ester or anhydride thereof. In his working examples, Klein used approximately equimolar amounts of carboxylic acid and polyamine. However, he states that the molar ratio of the polyoxypropylene diamine or triamine to the dicarboxylic acid may range from about 0.25:1 to about 4.0:1. The thermoplastic adhesives of Klein are made by reacting the polyoxypropylene diamine or triamine with the dicarboxylic acid at about 175° to about 275° C for about 1 to 12 hours.

The preparation of thermoplastic adhesives is disclosed in Schulze U. S. Patent No. 4,119,615. The adhesives are prepared by a two-step process. In the first step, about 1 to 4 moles of oxalic acid is reacted with a polyoxyalkylene diamine or triamine, the preferred ratio being a mole ratio of about 1 to 2 moles of oxalic acid per mole of polyoxyalkylene diamine or triamine. This results in the formation of a so-called liquid prepolymer which is then reacted with an alkylene diamine such as ethylene diamine which contain 2 to 18 carbon atoms to provide the resinous polyoxyamide thermoplastic adhesive composition.

Sharkey U. S. Patent No. 4,229,567 and Sharkey U. S. Patent No. 4,282,346 disclose copolyamides prepared from dicarboxylic acids, piperazine and polyoxyalkylene diamines. For example, azelaic acid, adipic acid, piperazine and a polyoxypropylene diamine were used as starting materials in the ratio of 0.7:0.25:0.88:0.2 in an experiment where the azelaic acid and the adipic acid were first reacted with the polyoxypropylene diamine to form a reaction product to which piperazine was added in aqueous solution. The thus-prepared copolyamides are described as thermoplastic adhesives.

Mains et al. U. S. Patent No. 4,062,819 is directed to polyamide polyblends wherein one component is a high molecular weight thermoplastic polyamide and the other is a minor amount of a polyamide derived from a high molecular weight dibasic acid. The second component is prepared by reacting a dicarboxylic acid such as "dimer acids" with an aliphatic polyalkylene diamine such as ethylene diamine.

Rasmussen U. S. Patent No. 4,218,351 discloses impact resistant thermoplastic polyamides which are suitable for use as hot melt adhesives and which contain, as a component, a minor amount of an amorphous amide-forming oligomer which is described as a polyoxyalkylene diamine having a number average molecular weight in the range of about 900 to about 5000.

Mitchell, et al. U. S. Patent No. 4,062,820 discloses copolyamides derived from a mixture of a polymeric fatty acid and a short chain dibasic acid with a mixture of amines composed of a polyoxyalkylene diamine and a short chain diamine such as ethylenediamine.

Rieder U. S. Patent No. 4,239,635 is directed to aqueous metal working fluids containing a carboxylic acid group terminated polyoxyalkylene diamide or an alkali metal, ammonium or organic amine salt of the diamide. The diamide is prepared by reacting a dicarboxylic acid with a polyoxyalkylenediamine in a 2:1 mole ratio.

Chang U. S. Patent No. 4,588,783 relates to heat curable compositions containing polyhydroxyethyl carbonates which are prepared by reacting an amidoamine with an organic carbonate. The amidoamines are prepared by reacting a polyester with an equivalent excess of a polyamine, for example, by reacting two moles of isophorone diamine with one mole of dimethylcyclohexane dicarboxylate.

## Background of the Present Invention

The polyoxyalkylene polyamines of the type disclosed in Yeakey U. S. Patent No. 3,654,370 are prepared by the oxyalkylation of a polyhydric alcohol. The preferred starting materials are dihydric and trihydric alcohols such as propylene glycol or glycerol and propylene oxide or ethylene oxide. Copolymer polyols of ethylene oxide and propylene oxide are also useful, particularly those containing from about 5 to about 40 wt.% of ethylene oxide and, correspondingly, from about 95 to about 60 wt.% of propylene oxide.

The molecular weight of the polyol is determined by the number of moles of epoxide that are reacted with the alcohol initiator. Since the addition is random, the final alkoxylation product will not be a pure compound but, rather, will be a mixture of polyoxyalkylene polyols. For example, if the polyol is a polyol prepared by reacting glycerol or trimethylol propane with propylene oxide, using an amount of propylene oxide adequate to provide for an average molecular weight of about 1,000, the final propoxylation product will actually be composed of a mixture of polyoxypropylene triols having molecular weights varying from about 800 to about 1,200, the molecular weight distribution following a Gaussian distribution curve (sometimes referred to as a sine curve or a Poissan curve). As the molecular weight of the polyol increases, the spread in the molecular weights will also increase. Thus, when the average molecular weight of the triol is about 3,000, the deviation will be about ±400 molecular weight units so that most of the product will fall within the molecular weight range of about 2,600 to about 3,400.

As the molecular weight is still further increased, the percentage of free hydroxyl groups in the reaction mixture will decrease because of the added bulk of the already formed polyol, thus making the addition of more propylene oxide groups progressively more difficult. As a practical matter, when the triol reaches an average molecular weight of about 5,000, further propoxylation is accomplished only with extreme difficulty. The 5,000 molecular weight polyoxypropylene triols will have a molecular weight distribution of about ±1,000 so that the actual molecular weight range will be from about 4,000 to about 6,000. Again, the molecular weight distribution following a Gaussian distribution curve.

A further complication is encountered during the propoxylation to the higher molecular weights. As the reaction time and temperature are increased to encourage propoxylation, there is introduced a tendency on the part of the propylene oxide to isomerize to allyl alcohol and a tendency on the part of the hydroxypropyl end groups of the polyoxypropylene triol to dehydrate to form a terminal olefin group and water. Both the water and the allyl alcohol are susceptible to oxyalkylation thereby diluting the polyoxypropylene diol with undesired generally low molecular weight diol contaminants derived from the water and monofunctional allyl

alcohol propoxylates. From as little as one percent to as much as ten percent of the oxypropyl end groups of the triol may dehydrate to form groups with terminal unsaturation in increasing the average molecular weight from about 3,000 to about 5,000.

When a polyoxypropylene polyol of this nature is reductively aminated in accordance with the procedure of Yeakey U. S. Patent No. 3,654,370, comparatively higher temperatures and longer reaction times are required as the molecular weight of the polyol increases. This can result in the cleavage of the polyol to form undesired and unwanted alkyl ether by-products and hydrogenation of the unsaturated groups on the polyol to form propyl ethers.

Thus, although the results obtained heretofore with polyoxyalkylene diamines and triamines of the type disclosed by Yeakey have been generally satisfactory, problems such as those mentioned above have detracted from the utility of the products.

## SUMMARY OF THE INVENTION

In accordance with the present invention, molecular weight distribution and terminal unsaturation problems such as those mentioned above are significantly reduced through the provision of aromatic amidoamines containing terminal primary amine groups which are analogous in function and reactivity to the polyoxyalkylene polyamines of Yeakey et al.

Another significant property of the aromatic amidoamides of the present invention, as compared with the corresponding polyoxyalkylenepolyamines, is the desirable increase in "stiffners" or "hardners" that is obtained without otherwise adversely affecting the other properties of the amidoamines. For example, when the higher molecular weight polyoxyalkylene polyamines are used to cure epoxy resins, the resultant cured epoxy resin will frequently exhibit undesirable flex and impact properties and other related properties attributable to the "rubbery" nature of the high molecular weight polyoxyalkylene polyamines. Thus, it is frequently necessary to use additives and/or fillers to provide a final cured epoxy resin having the desired physical properties. The aromatic amidoamides of the present invention being significantly stiffer, can be used successfully with lesser quantities of fillers and/or additives or even without additives. The addition of these amide groups adds phase mixing advantages (when used as epoxy curing agents) over conventional polyoxyalkylene polyamines in many situations.

The improvements of the present invention are obtained through the provision of novel polyamidopolyamines which are prepared by the sequential reaction of an aliphatic or aromatic di-primary amine with a reaction product of at least a bimolecular excess of an aromatic or aliphatic dicarboxylic acid with a polyoxyethylene, a polyoxypropylene or a poly(oxyethylene/oxypropylene) diamine or triamine.

The intermediate reaction products of the present invention are obtained by reacting a polyoxypropylene, a polyoxyethylene or a polyoxypropylene/polyoxyethylene diamine or triamine with an aliphatic or aromatic dicarboxylic acid in molar proportions such that at least about 2 mole equivalents of carboxylic acid are provided in the reaction mixture for each mole equivalent of amine present in the reaction mixture.

Thus, it has been discovered in accordance with the present invention, that when the carboxylic acid is in excess, as described, each of the primary amine groups of the polyamine will preferentially react with a carboxyl group of the carboxylic acid, ester or anhydride thereof and be linked thereto through an amide linkage to thereby provide a reaction product which is substantially free from terminal primary amine groups and is characterized by the presence of terminal carboxylic acid, anhydride or ester groups.

The reaction between the polyoxyalkylene polyamine and the aromatic carboxylic acid, ester or anhydride thereof, is preferably conducted in an autoclave at autogenous pressure which may suitably range from about 0 to about 1 atmospheres and at a temperature of from about 150° to about 250°C. The reaction time required for completion of the reaction will normally range from about 0.5 to about 12 hours. By-product water of reaction is preferably removed as formed, so that the reaction product obtained at the end of the reaction is the desired final product.

The thus-prepared intermediate reaction product is then reacted under essentially the same conditions outlined above with an aliphatic or aromatic di-primary amine to form the polyamidopolyamine reaction products of the present invention which are characterized by the presence of terminal primary amine groups, the substantial absence of terminal carboxyl groups, and the presence of internal amido and carboxy groups.

Detailed Description

The polyamidopolyamines of the present invention are reaction products which may generally be characterized as products having the following formula:

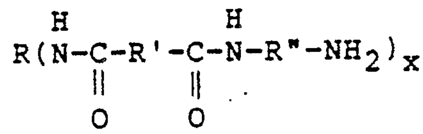

(I)

Wherein:

R represents an ethoxy, a propoxy or an ethoxy/propoxy group having an average molecular weight of about 200 to about 7000;

$R'$ represents an aliphatic or an aromatic group having an average molecular weight of about 42 to about 1000 and containing from about 3 to about 70 carbon atoms;

$R''$ represents an aliphatic or an aromatic group having an average molecular weight of about 24 to about 500 and containing from about 2 to about 35 carbon atoms; and

x is a positive integer having a value of 2 or 3.

When x has a value of 2, the reaction products of the present invention are essentially linear tetramido diprimary amines having the formula:

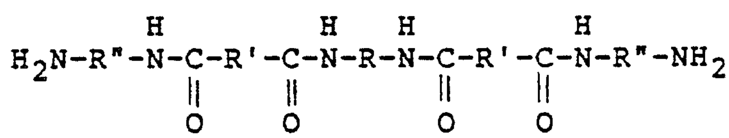

(II)

Wherein R, $R'$ and $R''$ have the meaning given above.

In like fashion, when x is 3, the reaction product will be a hexamidohexacarboxytri-primary amine.

R may also be defined as the nucleus of a polyoxyethylene, polyoxypropylene of poly-(oxyethylene/oxypropylene) diamine or triamine having the formula:

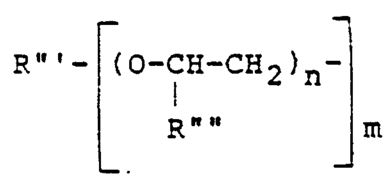

(III)

Wherein:

$R'''$ is the nucleus of an oxyalkylation susceptible dihydric or trihydric alcohol containing 2 to 6 carbon atoms;

m is an integer having a value of 2 to 3;

n is a number having an average value of about 1 to about 50; and

$R''''$ represents hydrogen or methyl.

The Dicarboxylic Acid Starting Material

The dicarboxylic acid starting material for the present invention may be any suitable aliphatic or aromatic dicarboxylic acid containing from about 3 to about 70 carbon atoms, having an average molecular weight of about 132 to about 1000 or an anhydride or a lower alkyl ester thereof wherein the alkyl group contains from about 1 to 4 carbon atoms and, more preferably, is methyl.

Examples of suitable aliphatic dicarboxylic acids that may be used include adipic acid, dodecanedioic acid, glutaric acid, azelaic acid, sebacic acid, the so-called "dimer acid" prepared by the dimerization of

unsaturated monocarboxylic acids such as oleic acid, linoleic acid, eleostearic acid, and mixtures thereof which are sold commercially as "tall oil fatty acids".

Other suitable dicarboxylic acids that may be used include brasslic acid, octadecanedioic acid, thapsic acid and dodecanedioic acid.

Examples of aromatic dicarboxylic acid that may be used as starting materials for the present invention include acids such as terephthalic acid, isophthalic acid, trimesic acid, 1,1,3-trimethyl-3-phenylidan-4′,5-dicarboxylic acid, 2,6-naphthalene dicarboxylic acid, t-butyl isophthalic acid, etc. (i.e., benzene dicarboxylic acids and tricarboxylic acids, hemimellitic acid, trimellitic acid, 2-phenyl pentanedioic acid, etc.).

The Polyoxyalkylene Polyamine Starting Materials

The polyoxyalkylene polyamine starting materials for the present invention include polyoxypropylene diamines and triamines, polyoxyethylene diamines, and polyoxyalkylene diamines and triamines containing mixtures of both ethylene oxide and propylene oxide and, preferably, mixtures of from about 5 to about 40 wt.% of ethylene oxide with, correspondingly, from about 95 to 60 wt.% of propylene oxide. Where mixed propylene oxide/ethylene oxide polyols are employed, the ethylene oxide and propylene oxide may be premixed prior to reaction to form a hetero copolymer, or the ethylene oxide and the propylene oxide may be sequentially added to the ethoxylation kettle to form block oxypropylene/oxyethylene copolymers.

In general, the polyoxyalkylene polyamine starting material may be defined as a polyoxyalkylene polyamine having the formula:

(IV)

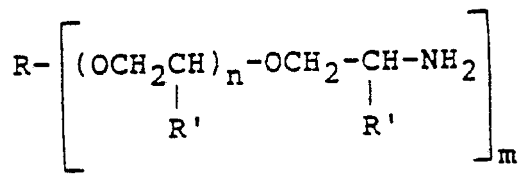

Wherein R is the nucleus of an oxyalkylation-susceptible polyhydric alcohol containing 2 to 12 carbon atoms and 2 and 3 hydroxyl groups, and R′ is hydrogen or methyl, n is a number having an average value of 0 to 50, and m is an integer having a value of 2 to 3.

In general, the average molecular weight of the polyoxypropylene diamine or triamine starting material will be from about 200 to about 5,000.

An advantage is obtained when using lower molecular weight diamine and triamine starting materials such as those having average molecular weights of about 200 to about 3,000 in that the final products will have primary amine functionalities and higher molecular weights but will contain significantly fewer contaminants of the type formed by the oxypropylation of dihydric and trihydric alcohols with propylene oxide to form polyoxypropylene diols and triols having molecular weights of 3,000 to 5,000.

One group of appropriate polyoxyalkylene diamines that may be used are those that are sold by the Texaco Chemical Company as Jeffamine$^R$ D-series products having the formula:

(V)

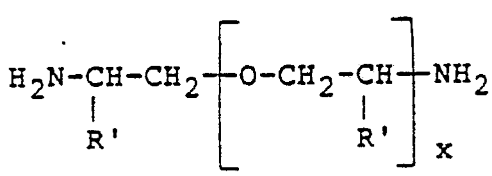

Wherein R′ independently represents hydrogen or methyl and x is a number having an average value of about 1 to about 60.

Representative products having this structural formula include polyoxypropylene diols (wherein R′ is methyl) having an average molecular weight of about 230 wherein the value of x is between 2 and 3 (Jeffamine$^R$ D-230 amine), polyoxypropylene diols having an average molecular weight of about 400 wherein x has a value between about 5 and 6 (Jeffamine$^R$ D-400 amine), and a polyoxypropylene diol product having an average molecular weight of about 2,000 wherein x has a value of about 33 (Jeffamine$^R$ D-2000 amine) and a product having an average molecular weight of about 4,000 wherein x has a value of about 60 (Jeffamine$^R$ D-4005 amine).

Another appropriate class of polyoxyalkylene diamines, containing both ethylene oxide and propylene oxide, which may be used are polyoxypropylene diamines that are sold by the Texaco Chemical Company as Jeffamine[R] ED-series products having the formula:

(VI)

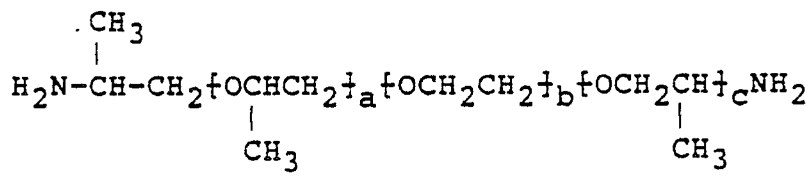

Wherein a + c equals a number having a value of from about 2 to about 10 and b is a number having a value of from about 1 to about 50.

Examples of products having this general formula include a commercial product having an average molecular weight of about 600 where the value of b is about 8.5 and the value of a + c is about 2.5 (Jeffamine[R] ED-600), a commercial product having an average molecular weight of about 900 wherein the value of a + c is again about 2.5, but the value of b is about 15.5 (Jeffamine[R] ED-900). Other examples are those wherein a + c has a value of about 2.5 including a product having an average molecular weight of about 2,000 wherein the value of b is about 40 (Jeffamine[R] ED-2001) and a product having an average molecular weight of about 4,000 wherein the value of b is about 85 (Jeffamine[R] ED-4000).

An example of appropriate polyoxypropylene triamines that may be used as a starting material for the present invention include triamines sold by Texaco Chemical Company as Jeffamine[R] T-series products having the formula:

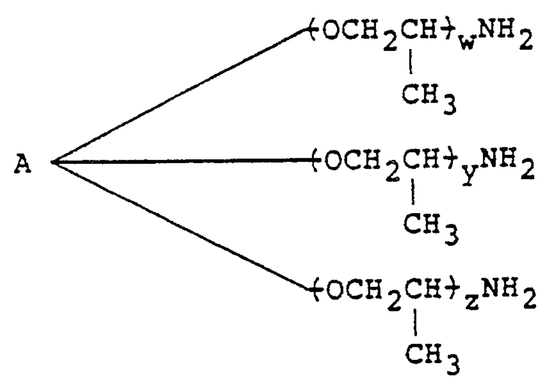

(VII)

Wherein A represents the nucleus of an oxyalkylation susceptible trihydric alcohol containing about 3 to about 6 carbon atoms, w, y and z are numbers and the average value of the sum of w + y + z is from about 4 to about 100.

An example of such a product is a commercial product having an average molecular weight of about 400 wherein A represents a trimethylol propane nucleus, and the product contains about 5 to about 6 moles of propylene oxide (Jeffamine[R] T-403 amine) and a product having an average molecular weight of about 5,000 wherein A represents a glycerol nucleus and the product contains about 85 moles of propylene oxide (Jeffamine[R] T-5000).

## Preparation of the Intermediate Reaction Product

In accordance with the present invention, a dicarboxylic amidoamine reaction product is prepared by reacting the polyoxyalkylene polyamine starting material with at least 2 mole equivalents per mole of polyoxyalkylene polyamine starting material of an aliphatic or aromatic dicarboxylic acid of the type described above, or an ester or an anhydride thereof. The reaction is conducted noncatalytically at autogeneous pressure at a temperature within the range of about 150° to about 250° C. for a reaction time within the range of about 0.5 to about 12 hours. Normally, the reaction will go to completion after a reaction time within the range of about 2 to about 6 hours.

By-product water of reaction is preferably removed from the reaction mixture as formed. The reaction is

complete when essentially all of the amine groups of the polyoxyalkylene polyamine have reacted with carboxyl groups of the dicarboxylic acid. Under the noncatalytic reaction conditions employed herein, the polyoxyalkylene diamine or triamine groups are essentially unreactive with each other.

The thus prepared intermediate reaction product may be characterized by the following formula:

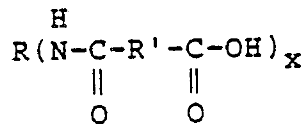

(VIII)

Wherein R, R′ and x have the meaning given above.

The dicarboxyamidoamines that are formed in accordance with the present invention are liquid or amorphous solid materials having a molecular weight within the range of about 400 to about 15,000 and containing 2 or 3 terminal carboxylic acid, anhydride or ester groups.

## The Di-Primary Amine Reactant

In accordance with the present invention, the intermediate reaction product is reacted with a di-primary amine which may suitably be an aliphatic or an aromatic diamine.

Such di-primary amines may be represented generally by the formula:

(IX) $H_2N\text{-}R''\text{-}NH_2$

Wherein R″ has the meaning given above in formula (I).

R″ may suitably be an oxyethyl, a polyoxyethyl, an oxypropyl, a polyoxypropyl, a poly(ethoxy/propoxy), a phenyl, a substituted phenyl, an alkyl, a cycloalkyl, an ethylamino, a propylamino, etc., group.

Representative aliphatic di-primary amines that may be used include compounds such as a polyoxyethylene diamine, a polyoxyethylene diamine containing from about 1 to about 5 oxyethylene groups, a polyoxypropylene diamine containing from about 1 to about 10 oxypropyl groups, isophorone diamine, 1,2-diaminocyclohexane, 1,6-hexane diamine, ethylenediamine, diethylene triamine, triethylene tetramine, tetraethylene pentamine, etc., propylene diamine, dipropylene triamine, tripropylene tetramine, etc.

Examples of aromatic dicarboxylic acid and tricarboxylic acids that may be used as starting materials for the present invention include acids such as terephthalic acid, isophthalic acid, trimesic acid, 1,1,3-trimethyl-3-phenylidan-4′,5-dicarboxylic acid, 2,6-naphthalene dicarboxylic acid, t-butyl isophthalic acid, etc. (i.e., benzene dicarboxylic acids and tricarboxylic acids, hemimellitic acid, trimellitic acid, 2-phenyl pentanedioic acid, etc.).

## Preparation of the Polyamido Di- and Tri-Primary Amines

In accordance with the present invention, an intermediate reaction product of the type described above is reacted with a di-primary amine to form a reaction addition product comprising the polyamidodi- or tri-primary amine reaction products of the present invention as represented by the following formula:

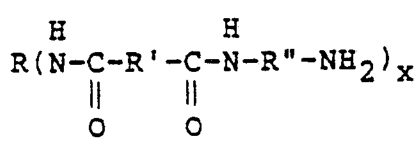

(I)

Wherein:

R represents an ethoxy, a propoxy or an ethoxy/propoxy group having an average molecular weight of about 200 to about 7000;

R′ represents an aliphatic or an aromatic group having an average molecular weight of about 42 to about 1000 and containing from about 3 to about 70 carbon atoms;

R″ represents an aliphatic or an aromatic group having an average molecular weight of about 24 to about

500 and containing from about 2 to about 36 carbon atoms; and
x is a positive integer having a value of 2 or 3.

The polyamidodi- and tri-primary amines are prepared by reacting the intermediate reaction product with an equimolar amount of the di-primary amine reactant described above at autogenous pressure at a temperature within the range of about 150° to about 250° C. for a reaction time within the range of about 0.5 to 12 hours. Normally, the reaction will go to completion after a reaction time within the range of about 2 to about 6 hours.

By-product water reaction is preferably removed from the reaction mixture as formed. The reaction is complete when essentially all of the carboxyl groups have reacted with the primary amine groups of the di-primary amine.

The polyamidopolydi-primary or tri-primary amines prepared in the above described manner are liquid or amorphous solid materials having a molecular weight within the range of about 600 to about 15,000 and contain an average of about 2 to about 3 terminal primary amine groups, depending on the functionality of the polyoxyalkylenepolyamine starting material.

## SPECIFIC EXAMPLES

### Example 1 (6152-29)

To a 500 ml 3-necked flask equipped with a thermometer, addition funnel, Dean-Stark trap, stirrer and a nitrogen line was charged with JEFFAMINE[R] D-4000 (300g, 0.075 mole) and adipic acid (21.9g, 0.15 mole). The mixture was heated to 200° C. for two hours. An aliquot of sample (15g) was taken and analyzed to monitor the completion of amide formation by amine titration. Then tetraethylene glycol diamine (EDR-192) (27g, 0.14 mole) was added and maintained at 200° C. for an additional two hours. After cooling to room temperature, an opaque attractive, lightly colored solid was recovered (324.9g). The product was soluble in methanol, but insoluble in water or acetone. The amine analysis indicated 0.39 meq/g (theoretical 0.40 meq/g) and acidity was 0.02 meq/g. The IR spectrum showed the evidence of amide formation.

The example illustrates a two-step, one-pot synthesis of an amidoamine with an EDR-series amine as the terminal amine.

Other examples and product properties are cited in the following Table I.

## TABLE I

SYNTHESIS OF $H_2N(CH_2CH_2O)_xCH_2CH_2NH\overset{O}{\overset{\|}{C}}-R_1-\overset{O}{\overset{\|}{C}}-NH-JEFFAMINE-NH\overset{O}{\overset{\|}{C}}-R_1-\overset{O}{\overset{\|}{C}}HN-$

$(CH_2CH_2O)_xCH_2CH_2NH_2$

| Notebook No. | Starting Materials | Properties | <------Analysis------> $-NH_2$ meq/g | -COOH meq/g | IR (Amide) |
|---|---|---|---|---|---|
| 6103-97 | D-4000[1]<br>Adipic Acid<br>EDR-148[3] | Solid, opaque brown, insol. in $H_2O$, sol. in MeOH, acetone; mp 100°C. | 0.26<br>(0.45)* | - | Yes |
| 6152-29 | D-4000<br>Adipic acid<br>EDR-192[4] | Solid, opaque tan, insol. in $H_2O$, sol. in MeOH, acetone; mp 35°C. | 0.39<br>(0.40)* | 0.02 | Yes |
| 6103-96 | D-2000[2]<br>Adipic acid<br>EDR-192 | Solid, opaque tan, insol. in $H_2O$, sol. in MeOH, acetone; mp 40°C. | 0.60<br>(0.73)* | - | Yes |
| 6103-94 | D-2000<br>Adipic acid<br>EDR-148 | Solid, opaque light brown, insol. in $H_2O$, sol. in MeOH & acetone; mp 100°C. | 0.74<br>(0.76)* | - | Yes |
| 6152-34 | D-2000<br>Terephthalic acid<br>EDR-192 | No product due to slow reaction (two-phase reaction) | | | |
| 6152-31 | D-2000<br>Dimer acid<br>BAEE[5] | Liquid, highly viscous, clear yellow, insol. in $H_2O$, sol. in acetone | 0.74<br>(0.59)* | 0.01 | Yes |
| 6152-30 | D-2000<br>Dimer acid<br>EDR-148 | Liquid, viscous clear yellow, insol. in $H_2O$, sol. in acetone | 0.73<br>(0.58)* | 0.01 | Yes |

TABLE I (Cont'd.)

| Notebook No. | Starting Materials | Properties | <--Analysis--> -$NH_2$ meq/g | -COOH meq/g | IR (Amide) |
|---|---|---|---|---|---|
| 6152-33 | D-2000 Dimer acid EDR-192 | Liquid, transparent, light yellow, insol. in $H_2O$, sol. in acetone | 0.47 (0.55)* | 0.02 | Yes |
| 6103-98 | ED-600[6] Adipic acid EDR-148 | Soft solid, opaque, pearlescent, sol. in $H_2O$ and MeOH | 1.69 (1.68)* | - | Yes |
| 6103-91 | ED-600 Terephthalic acid EDR-148 | Solid, cream-colored, insoluble in $H_2O$, MeOH, acetone, or MeOAc; mp ca. 190°C. | | | Yes |

* Theoretical
1) Jeffamine[R] D-4000 amine.
2) Jeffamine[R] D-2000 amine.
3) Triethylene glycol diamine.
4) Tetraethylene glycol diamine.
5) Bis aminoethyl ether ($NH_2CH_2CH_2OCH_2CH_2NH_2$).
6) Jeffamine[R] ED-600 amine.

## Example 2 (6153-24)

### Preparation of JEFFAMINE[R] D-2000-Adipic Acid Adduct

To a 3-liter flask equipped with thermometer, stirrer, Dean-Stark trap and nitrogen line was charged JEFFAMINE[R] D-2000 (2000g, 1 M) and adipic acid (292g, 2 M). The mixture was heated to 200°C. for three hours. During the process, 34 ml. of water was removed through a Dean-Stark trap. The system was cooled to room temperature and an orange colored liquid (2241g) was obtained. The analysis indicated acidity 0.93 meq/g (calc. 0.89) and amine 0.01 meq/g.

## Example 3 (6153-55)

### D-2000-Adipic Acid-Toluene Diamine (1:2:4)

To a 500 ml 3-necked flask equipped with thermometer, stirrer, Dean-Stark trap and nitrogen pad was charged JEFFAMINE[R] D-2000 adipic acid adduct (226g, from 6153-24) and 2,4-toluenediamine (48.8g, 0.4

mole). The mixture was heated to 220 °C. for over 4 hours. After cooling, a dark liquid material was recovered (270.1g). The analysis showed:
Amine 2.15 meq/g (calc. 2.22 meq/g)
Acidity 0.05 meq/g
Water 0.03%

Example 4 (6153-27)

D-2000-Adipic Acid-DETDA (1:2:2 Molar Ratio)

To a 500 ml 3-necked flask equipped with thermometer, stirrer, Dean-Stark trap was charged the adduct of JEFFAMINE[R] D-2000-adipic acid (225.6g) and DETDA (diethyltoluenediamine, 35.6g). The mixture was heated to 220 °-210 °C. for over 4 hours and cooled to room temperature. A viscous brown liquid was recovered (247.0g). The analysis indicated amine 0.87 meq/g (calc. 0.76) and acidity 0.50 meq/g. Other examples are summarized in the attached table.

Example 5 (6153-27A)

A soap dish was made by mixing amine (prepared from JEFFAMINE[R] D-2000-adipic acid-DETDA, 6153-27), 32.7g, dipropyltriamine, 6.6g, and Epon 828 (from Shell) 56.1g. The well mixed material was poured into a plastic mold and cured at 70 °C. for overnight. The experiment demonstrated the usage of one amine in epoxy resin material application.

TABLE II

AROMATIC AMINE TERMINATED JEFFAMINE[R]-AMIDES

| D-400 | D-2000 | D-4000 |
|---|---|---|
| 6153-30<br>1:2:2*<br>Brown solid<br>Amine 1.85 meq/g<br>Acid 0.60 meq/g | 6153-27<br>1:2:2*<br>Dark liquid<br>Amine 0.87 meq/g<br>Acid 0.50 meq/g | 6153-32<br>1:2:2*<br>Dark liquid<br>Amine 0.68 meq/g<br>Acid 0.29 meq/g |
| 6153-29<br>1:2:4*<br>Brown solid<br>Amine 4.53 meq/g<br>Acid 0.33 meq/g | 6153-26<br>1:2:4*<br>Brown liquid<br>Amine 2.28 meq/g<br>Acid 0.28 meq/g | 6253-25<br>1:2:4*<br>Brown liquid<br>Amine 1.47 meq/g<br>Acid 0.30 meq/g |
| - | 6153-55<br>1:2:4 TDA*<br>Dark liquid<br>Amine 2.13 meq/g<br>Acid 0.05 meq/g<br>$H_2O$ 0.03% | - |

* Molar ratio of JEFFAMINE[R] amine : adipic acid : aromatic amine

TDA = toluene diamine

## Example 6 (6152-88)

To a 250-ml 3-necked flask equipped with thermometer, stirrer, Dean-Stark trap and nitrogen line was charged D-400-adipic acid adduct (prepared from 6152-83, 65.6g, 0.1M) at ca. 110° C. pot temperature, 1,6-hexanediamine (23.2g, 0.2M) was added. The mixture was then heated to 204° C. to remove water. The reaction was run for ca. 4 hour period of time and then cooled to room temperature. A solid material form of product was recovered. The analysis showed 2.51 meq/g amine (calc. 2.2 meq/g).

## Example 7 (6152-94)

The same procedures were used for the reaction of D-400-adipic acid adduct (65.6g) and isophorone diamine (34g). The reactants were heated at 200° C. for about 5 hours to remove water. The recovered product was a light yellow hard, transparent solid, which was soluble in methanol and insoluble in water. The analyses showed 1.85 meq/g amine (calc. 2.08) acidity 0.03 meq/g and water content 0.68%.

Results of other examples are summarized in the attached Table III.

## Example 8 (6153-50-1)

Utility of Product

The resulting product from 6153-50 was a viscous light yellow liquid and methanol soluble. This product (69.4g) was mixed with Epon 828 (Shell; 18.7g) and cured at 78 °C. overnight. A flexible, transparent, yellowish epoxy resin was made. The experiment demonstrated the usage of one amine in epoxy resin material applications.

## TABLE III

### ALKYL AMINE PRIMARY TERMINATED JEFFAMINE[R] AMINE AMIDE

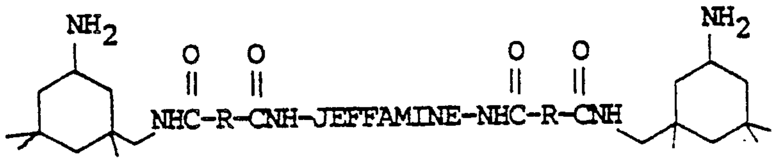

| | Isophorone Diamine | 1,2-Diamino-Cyclohexane | 1,6-Hexane-Diamine |
|---|---|---|---|
| D-400 Adipic Acid | 6152-92<br>Solid light yellow, transparent, hard<br>Amine 1.85 (2.08)<br>Acid 0.03; Sol. in MeOH; Insol. in $H_2O$ | 6153-98<br>Solid hard, yellow<br>Amine 2.22 (2.66)<br>Acid 0.06 | 6152-88<br>Solid creamy hard<br>Amine 2.51 meq/g |
| D-2000 Adipic Acid | 6153-50<br>Liquid yellow viscous<br>Amine 0.72 (0.73)<br>Acid 0.05 | 6153-99<br>Solid soft, grey-yellow<br>Amine 0.56 (0.56)<br>Acid 0.04 | |
| D-4000 Adipic Acid | 6153-8<br>Liquid light yellow hazy<br>Amine 0.25 (0.44)<br>Acid 0.03 | 6199-15<br>Semisolid yellow hazy<br>Amine 0.54<br>Acid 0.07 | 6153-20<br>Solid white, creamy soft hazy<br>Amine 0.25<br>Acid 0.07 |
| ED-2001 Adipic Acid | 6153-17<br>Solid white<br>mp ca. 40°C.<br>Amine 0.35 (0.76)<br>Acid 0.08<br>Soluble in water | 6199-17<br>Solid grey<br>Amine 1.17 (1.0)<br>Soluble in water | 6153-19<br>Solid light colored, hard<br>Insol. in water |
| D-400 Dimer Acid | 6199-34<br>Solid light yellow, transparent, soft<br>Amine 1.11 (1.15)<br>Acid 0.06 | 6199-37<br>Liquid yellow transparent<br>Amine 1.43 (1.3)<br>Acid 0.06 | |
| D-2000 Dimer Acid | 6199-35<br>Semisolid yellow transparent<br>Amine 0.37 (0.68)<br>Acid 0.04 | 6199-20<br>Liquid yellow transparent<br>Amine 0.55 (0.6) | 6199-23<br>Solid yellow transparent, soft<br>Amine (0.64)<br>Acid 0.04 |

* Analysis : Amine and acidity in meq/g. Calculated figures in parenthesis; *DAMP : Example 6199-44.

Example 9 (6153-43)

To a 500 ml flask equipped with a thermometer, mechanical stirrer, Dean-Stark trap and nitrogen line was charged T-5000-adipic acid adduct (by mixing JEFFAMINE T-5000, 289g and adipic acid 21.9g. The two reactants were heated at 200-220 ° C. to remove water) and diethyltoluene diamine (53.4g). The contents were further heated at 220 C. for 3 hours and then cooled to room temperature. Analyses of the viscous brown liquid (350g) indicated 1.58 meq/g amine and 0.34 meq/g acidity.

Example 10 (6199-1A)

Utility of Product 6199-1

Using the same procedure of Example 9, a product of T-2000-dimer acid-DETDA (1:3:3 molar ratio adduct) was prepared, with analyses of 1.19 meq/g amine and 0.40 meq/g acid. A portion of product 6199-1 (4.2g) was mixed thoroughly with Epon 828 (Shell product, 18.7g), then poured to a mole and cured at 78 ° C. overnight. A flexible epoxy resin material was made.

TABLE IV

TRIFUNCTIONAL AROMATIC AMINES FROM JEFFAMINE T-SERIES AMINES

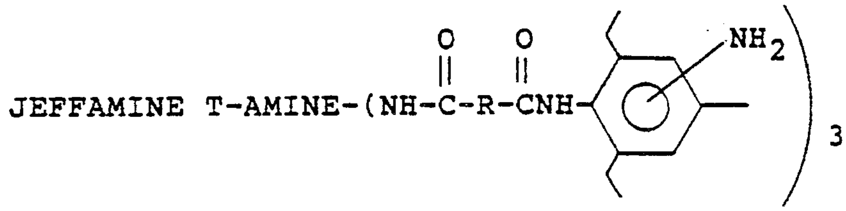

| | R = Adipic Acid | R = C36 Dimer Acid |
|---|---|---|
| T-403 | 6153-83[1] Brown solid<br>$NH_2$ : 5.48 meq/g<br>Acid : 0.56 meq/g<br>IR : Amide | 6199-8[1] Semisolid brown<br>$NH_2$ : 2.97 meq/g<br>Acid : 0.15 meq/g |
| T-3000 | 6153-62[1]<br>$NH_2$ : 2.5 meq/g<br>Acid : 0.49 meq/g<br>IR : Amide | 6199-1[2] Liquid (brown, viscous)<br>$NH_2$ : 1.19 meq/g<br>Acid : 0.40 meq/g |
| T-5000 | 6153-43[1] Liquid (brown viscous)<br>$NH_2$ : 1.58 meq/g<br>Acid : 0.34 meq/g | 6199-2[2] Liquid (orange viscous)<br>$NH_2$ 0.85 meq/g<br>Acid : 0.31 meq/g |

1) T-amine:diacid:amine (1:3:6 molar ratio)
2) T-amine:diacid:amine (1:3:3 molar ratio)

Example 11 (6152-83)

Carboxylic Acid Terminated JEFFAMINE[R] D-Amine

To a 3-liter 3-necked flask equipped with a thermometer, mechanical stirrer, Dean-Stark trap, and nitrogen line was added JEFFAMINE[R] D-400 (1200g, 3M) and adipic acid (876 g, 6M). The mixture was heated to 200° C. for about three hours to remove water (ca. 100 ml). The recovered product (1966.6g) was a grey viscous liquid. The analysis indicated total conversion of amine, 0.01 meq/g for amine and 3.27 meq/g for acidity (3.1 calc.).

Example 12 (6153-66)

DPTA Capped D-400-Adipic Acid Adduct

To a 250-ml 3-necked flask equipped with thermometer, stirrer, Dean-Stark Trap and nitrogen line was charged D-400-adipic acid adduct (6152-83, 65.6g) and dipropyltriamine (26.2g). The mixture was heated to 170-220° C. for over 4 hours and 3.6 cc of water removed. The recovered product was analyzed to be 0.01 meq/g for acidity, 2.06 meq/g for primary amine and 2.11 meq/g for secondary amine.

Example 13 (6199-36-1)

Usage Example

The mixture of 6199-36 (28.5g) and Epon 828 (18.7g) was mixed well and poured into a mold and cured at 78° C. overnight. An attractive epoxy resin was made.

TABLE V

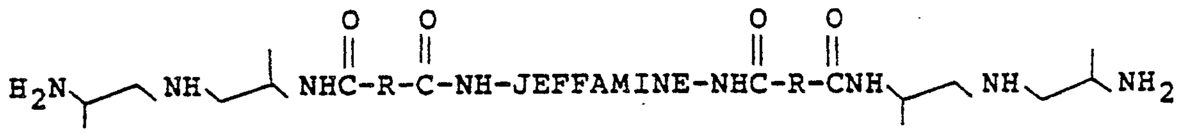

| Diacid Precursor | Properties of Products |
| --- | --- |
| D-400 + adipic acid (1:2) | 6153-66 : Semisolid yellow; Primary amine 2.06 meq/g (calc. 2.2); Secondary amine 2.11 meq/g Acidity 0.01 meq/g |
| D-2000 + adipic acid (1:2) | 6153-49 : Liquid viscous yellow Primary amine 0.96 meq/g Secondary amine 0.57 meq/g Acidity 0.08 meq/g |
| D-4000 + adipic acid (1:2) | 6153-12 : Semisolid (opaque) Primary amine 0.34 meq/g Secondary amine 0.23 meq/g Acidity 0.08 meq/g |
| ED-2001 + adipic acid (1:2) | 6153-18 : Solid, light grey, mp 35°C., water-soluble Primary amine 0.80 meq/g Secondary amine 0.59 meq/g Acidity 0.11 meq/g |
| D-400 + C36 dimer acid (1:2) | 6199-36 : Liquid yellow, transparent, viscous Primary amine 1.41 meq/g Secondary amine 0.71 meq/g Acidity 0.06 meq/g |
| D-2000 + C36 dimer acid (1:2) | 6199-19 : Liquid yellow, transparent Primary amine 0.41 meq/g Secondary amine 0.22 meq/g |

## Example 14

A product, 6152-31, prepared from JEFFAMINE[R] D-2000 amine, dimer acid and bisaminoethyl ether, gave unusual epoxy products.

Plastic Part I. Product 6152-31, 67.5g (0.05 meq) was mixed with 9.3g of Epon 828 (0.05 meq, diglycidol ether of bisphenol-A, Shell chemical Co.). The viscous material was poured into a flexible urethane mold to form a soap dish. The mold was placed in an oven and held overnight at 70° C. A rubbery epoxy part was obtained which was rather tough and elasic even though a deficiency of amine was present.

Plastic Part II. The run above was repeated except that 18.6g of Epon 828 was used. The molded turtle was transparent and had considerable resiliency.

Plastic Part III. To add toughness to the elastic epoxies obtained as described above, we added a

higher crosslinking amine. To the mold was added 33.8g of 6152-31, 56.1g of Epon 828 and 6.6g of dipropylenetriamine. The mixture and mold were heated in an oven at 63° C. overnight. We obtained autogenous phase separation. The shell of the turtle was very hard while the bottom was made of the flexible epoxy. Such one-pour, two-phase objects should have many applications for hard objects requiring a soft support, objects of art, floors, and building supports in earthquake areas.

The foregoing examples have been given by way of illustration only and are not intended as limitations on the scope of this invention, which is defined by the appended claims.

## Claims

1. A polyamidodi- or tri-primary amine characterised in that it has an average molecular weight of about 600 to about 15,000 and having the formula:

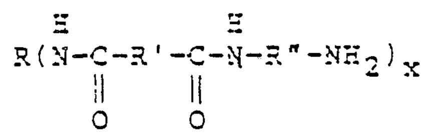

(I)

wherein:
R represents the reaction product residue of a poly(oxvethylene), poly(oxypropylene} or poly-(oxyethylene/oxypropylene) di- or tri-primary amine having an average molecular weight of about 200 to about 7,000,
R′ represents the reaction product residue of an aliphatic or an aromatic dicarboxylic acid containing about 5 to about 36 carbon atoms, or an anhydride, or a $C_1$ to $C_4$ alkyl ester thereof having an average molecular weight of about 132 to about 1,000,
R″ represents the reaction product residue of an aliphatic or aromatic di-primary amine having an average molecular weight of about 60 to 500 and containing from about 2 to about 20 carbon atoms, and
x is an integer having a value of 2 or 3.

2. An amine according to claim 1 characterised in that R represents a polyoxyalkylene polyamine reaction residue having the formula:

(III)

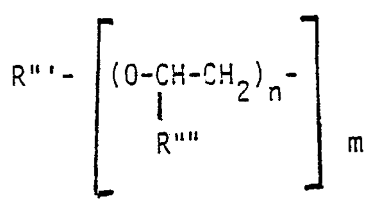

wherein R‴ represents the nucleus of an oxyalkylation susceptible polyhydric alcohol containing about 2 to about 12 carbon atoms,
R″″ represents hydrogen or methyl,
n is a positive integer having an average value of about 1 to about 50, and
m is an integer having a value of 2 or 3.

3. An amine according to claim 2, characterised in that said alcohol contains 2 to 3 hydroxyl groups.

4. An amine according to any of the preceding claims, characterised in that said alkyl ester has an average molecular weight of about 200 to about 1000 and in that said amine is prepared by a process comprising the steps of:

a. reacting a polyamine having the formula:

$R(NH_2)_x$

with at least a bimolar excess, based on the primary amine groups of said polyamine, of a dicarboxylic acid having the formula:

(X) 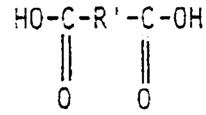

to thereby prepare an intermediate reaction product having the formula:

(VIII) 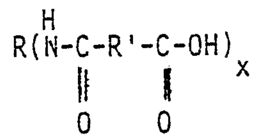

b. reacting said intermediate reaction product with a di-primary amine having the formula:
(IX) $H_2NR''RHN_2$

5. An amine according to claim 4, characterised in that a. and b. are carried out under non-catalytic autogenous reaction conditions, including a temperature within the range of about 150 to about 250 °C and a reaction time of about 0.5 to about 12 hours.

6. An amine according to any of the preceding claims, characterised in that it is a tetramidodi-primary amine having the formula:

(II) 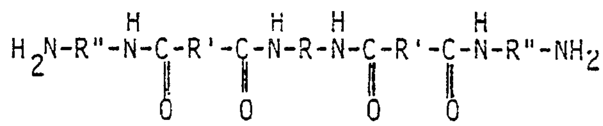

with R,R′ and R″ as defined in claim 1.

7. An amine according to any of the preceding claims, characterised in that the polyoxyalkylene polyamine has the formula:

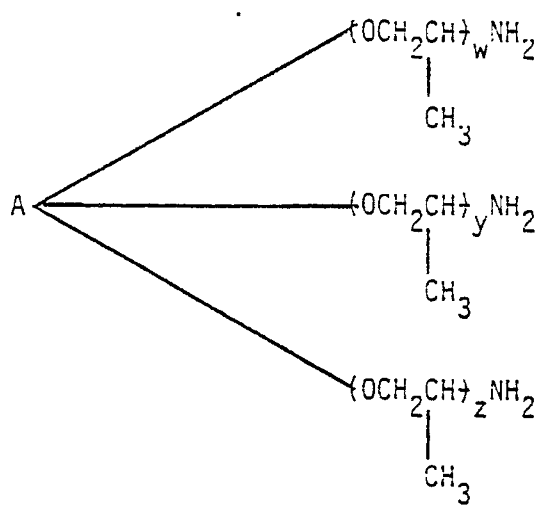

(VII)

wherein A represents the nucleus of an oxyalkylation susceptible trihydric alcohol containing from about 3 to about 8 carbon atoms, w, y and z are numbers and the average value of the sum of w + y + z is from about 4 to about 100 or in that the polyamine has the formula:

VI 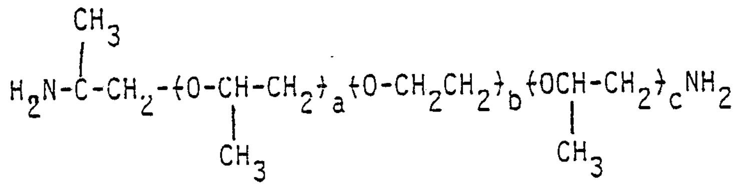

wherein a + c equals a number having a value of about 2 to about 10 and b is a number having a value of from about 1 to about 50.

8. An amine according to any of the preceding claims, characterised in that the polyoxypropylene triamine is a propoxylated, aminated derivative of trimethylol propane having an average molecular weight of about 400, or is a derivative of glycerol having an average molecular weight of about 3,000 or of about 5,000.

9. An amine according to any of the preceding claims, characterised in that the dicarboxylic acid is a saturated aliphatic dicarboxylic acid containing about 5 to about 36 carbon atoms or an unsaturated dimeric fatty acid containing about 36 carbon atoms, and the di-primary amine is an aromatic di-primary amine containing from about 6 to about 14 carbon atoms.

10. An amine according to claim 9,- characterised in that the dicarboxylic acid is adipic acid and the aromatic di-primary amine is diethyltoluenediamine.

11. An amine according to claim 9, characterised in that the dicarboxylic acid is a dimeric fatty acid containing about 36 carbon atoms and the aromatic di-primary amine is diethyltoluenediamine.

12. An amine according to claim 3, characterised in that the first polyamine has the formula:

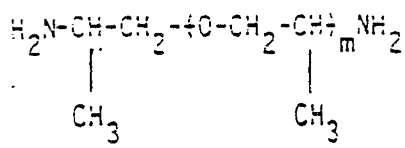

wherein m is a positive integer having an average value of about 2 to about 100.

13. A polyamidodi-primary amine according to claim 12, characterised in that the dicarboxylic acid is a saturated straight chain hydrocarbon dicarboxylic acid containing about 5 to 12 atoms, and that the di-primary amine is a polyoxyethylene diamine having the formula:

$H_2N\text{-}CH_2\text{-}CH_2 ( O\text{-}CH_2\text{-}CH_2 )_n\text{-}NH_2$

wherein n is a positive number having an average value of about 1 to about 4.

14. An amine according to claim 13, characterised in that the dicarboxylic acid is adipic acid or a dimeric fatty acid, having about 38 carbon atoms, the value of m for the first primary amine is from about 30 or about 60 and the value of n for the di-primary amine is about 2 or 3.

16. An amine according to claim 12, characterised in that the dicarboxylic acid is an aromatic dicarboxylic acid containing about 6 to about 12 carbon atoms, and
that the di-primary amine is a polyoxyethylene diamine having the formula:

$H_2N\text{-}CH_2\text{-}CH_2 ( O\text{-}CH_2\text{-}CH_2 )_n\text{-}NH_2$

wherein n is a positive number having an average value of about 1 to about 3.

16. An amine according to claim 15, characterised in that the dicarboxylic acid is terephthalic acid, the value of m for the first primary amine is from about 30 or about 60 and the value of n for the di-primary amine is about 2 or 3.

17. An amine according to claim 5, characterised in that the first polyamine has the formula:

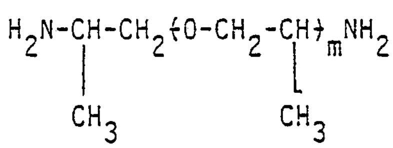

(HIV)

wherein m is a positive integer having an average value of about 2 to about 100,
that the dicarboxylic acid is a saturated straight chain hydrocarbon dicarboxylic acid containing about 5 to

about 12 carbon atoms, and
that the di-primary amine is an aromatic diamine or an aliphatic diamine.

18. An amine according to claim 17, characterised in that the value of m for the first polyamine is an integer having an average value of about 2 to about 60, the dicarboxylic acid is adipic acid or a saturated dimeric fatty acid containing about 38 carbon atoms, and in that the aromatic di-primary amine is isophorone diamine, 1,2-diaminocyclohexamine or 1,6-hexaminediamine.

19. An amine according to claim 5, characterised in that the first polyamine has the formula:

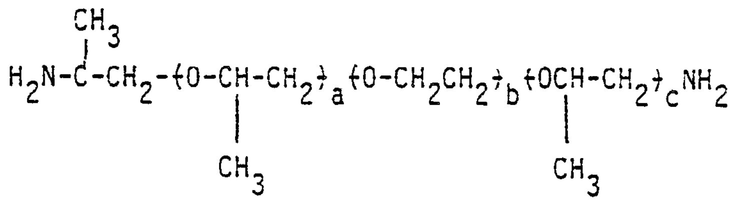

wherein a, b and c are positive numbers wherein a+c has an average value of about 2.5 and b has an average value of about 4 to 100, the dicarboxylic acid is a hydrocarbon dicarboxylic acid containing about 5 to about 36 carbon atoms, and
the di-primary amine is an aliphatic diamine containing about 2 to about 20 carbon atoms.

20. A polyamidodi-primary amine according to claim 19, characterised in that the value of b for the first polyamine has an average value of about 40,
the dicarboxylic acid is adipic acid or saturated dimeric fatty acid containing about 36 carbon atoms, and
the aromatic di-primary amine is isophorone diamine, 1,2-diaminocyclohexamine or 1,6-hexaminediamine.

21. An amine according to claim 5, characterised in that the first polyamine has the formula:

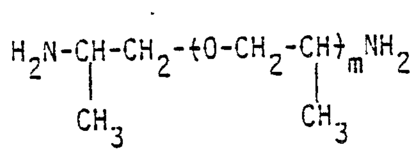

wherein m is a positive integer having an average value of about 2 to about 100,
that the dicarboxylic acid is a dicarboxylic acid containing about 5 to about 36 carbon atoms, and
that the di-primary amine is a polypropylene polyamine containing about 3 to about 9 carbon atoms.

22. An amine according to claim 21, characterised in that the value of m for the first polyamine is an integer having an average value of about 2 to about 60,
that the dicarboxylic acid is adipic acid or a dimeric fatty acid having about 36 carbon atoms, and that the polypropylenepolyamine is dipropyltriamine.